# EUROPEAN PATENT SPECIFICATION

(11) **EP 3 483 411 B1**
(45) Date of publication and mention of the grant of the patent: **10.09.2025**
(21) Application number: 18205748.9
(22) Date of filing: 12.11.2018
(51) Int. Cl.: F02C 6/08, F02C 7/18, F02C 9/18

(54) **COOLED COOLING AIR SYSTEM HAVING SHUTOFF VALVE AND PROPULSOR**
GEKÜHLTES KÜHLLUFTSYSTEM MIT ABSPERRVENTIL UND ANTRIEB
SYSTÈME D'AIR DE REFROIDISSEMENT REFROIDI AYANT UNE SOUPAPE D'ARRÊT ET UN PROPULSEUR

(30) Priority: 10.11.2017 US 201715809150
(43) Date of publication of application: 15.05.2019
(73) Proprietor: RTX Corporation, Farmington, CT 06032 (US)
(72) Inventor: SCHWARZ, Frederick M., Glastonbury, CT 06033 (US); HERRING, Neal R., East Hampton, CT 06424 (US)
(74) Representative: Dehns

(56) References cited:
- EP-A1- 3 109 435
- EP-A2- 2 642 083
- GB-A- 2 208 702
- US-A- 4 503 683
- US-A1- 2007 245 738
- US-A1- 2010 303 616
- US-A1- 2013 164 115
- US-A1- 2015 247 462

## Description

### BACKGROUND

This application relates to a system for providing cooled cooling air to a gas turbine engine wherein compressor section rotating part lives and turbine section rotating part lives are to be improved by such cooling.

Gas turbine engines are known and typically include a fan delivering air into a bypass duct as propulsion air and further into a compressor in a core engine. The compressed air is delivered into a combustor where it is mixed with fuel and ignited. Products of this combustion pass downstream over turbine rotors driving them to rotate. Turbine rotors, in turn, drive the compressor and fan.

Historically, a fan drive turbine rotor rotated with the fan at a single speed. More recently, it has been proposed to include a gear reduction between at least the fan drive turbine and the fan and alternatively between the fan drive turbine and a co-rotating compressor rotor section and the geared fan.

With this change, there have been challenges raised in the gas turbine engine. One such challenge is that with the faster turning co-rotating compressor rotor the exit temperature of the compressor section have greatly increased. Even without the aforementioned gearbox, compressor pressures have been made to increase by adding additional stages and additional rotational speed. Therefore temperatures at the rear of the compressor section, at the exit of the combustor and air that is channelled to critical hardware such the turbine section's first turbine blade have increased which challenges achievable component life. As such, cooling air, which is brought from the last stage of the compressor section and utilized at the engine, must be at an adequate pressure, temperature, and volume and such that the peak temperature of the cooling air is reduced to allow components to meet a certain economically viable life. EP2642083A2 discloses a gas turbine engine according to the preamble of claim 1.

EP 3 109 435 A1, US2010/303616A1, US 2007/245738A1, US 2015/247462A1, GB2208702 disclose other gas turbine engines according to the prior art.

US 2013/0164115 A1 discloses a bleed air and hot section component cooling air system and method, and US 4 503 683 A discloses a compact cooling turbine-heat exchanger assembly.

### SUMMARY

According to the present invention, there is provided a gas turbine engine as claimed in claim 1.

Embodiments of the disclosure are set forth in the dependent claims.

These and other features may be best understood from the following drawings and specification.

### BRIEF DESCRIPTION OF THE DRAWINGS

Figure 1 schematically shows a gas turbine engine.
Figure 2A schematically shows details of a cooling system.
Figure 2B shows a first arrangement, which is outside the wording of the claims.
Figure 2C shows an alternative arrangement.
Figure 2D shows yet another alternative arrangement.
Figure 2E is a control module diagram for the several systems of this disclosure.
Figure 2F shows an option.
Figure 3A shows a first location for an intercooler system, which is outside the wording of the claims.
Figure 3B shows a detail of the Figure 3A system.
Figure 4A shows an alternative location.
Figure 4B shows a detail of the Figure 4A system.
Figure 4C shows an alternative detail for the Figure 4A system.
Figure 5A shows another location, which is outside the wording of the claims.
Figure 5B shows details of the Figure 5A location.
Figure 6 shows yet another location.
Figure 7A shows another location, which is outside the wording of the claims.
Figure 7B shows details of the Figure 7A location.

### DETAILED DESCRIPTION

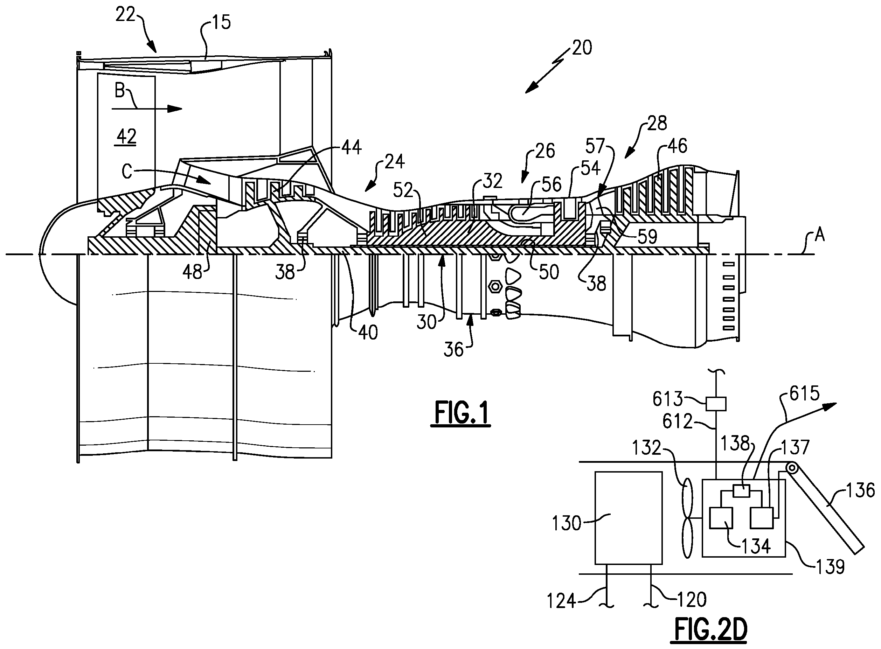

Figure 1 schematically illustrates a gas turbine engine 20. The gas turbine engine 20 is disclosed herein as a two-turbine turbofan that generally incorporates a fan section 22, a compressor section 24, a combustor section 26 and a turbine section 28 with two turbines rotating at two different speeds. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including turbofans with three-turbines driving one of the following: the fan with or without a gearbox, a first compression section and a second compression section.

The exemplary engine 20 generally includes a low speed turbine 30 and a high speed turbine 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, optionally a gearbox, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30 consisting here of a low pressure compressor and a fan-drive turbine or low pressure turbine. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is total pressure measured prior to inlet of low pressure turbine 46 as related to the total pressure at the outlet of the low pressure turbine 46 prior to an exhaust nozzle. The geared architecture 48 may be an epicyclic gear train, such as a planetary gear system, a star system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

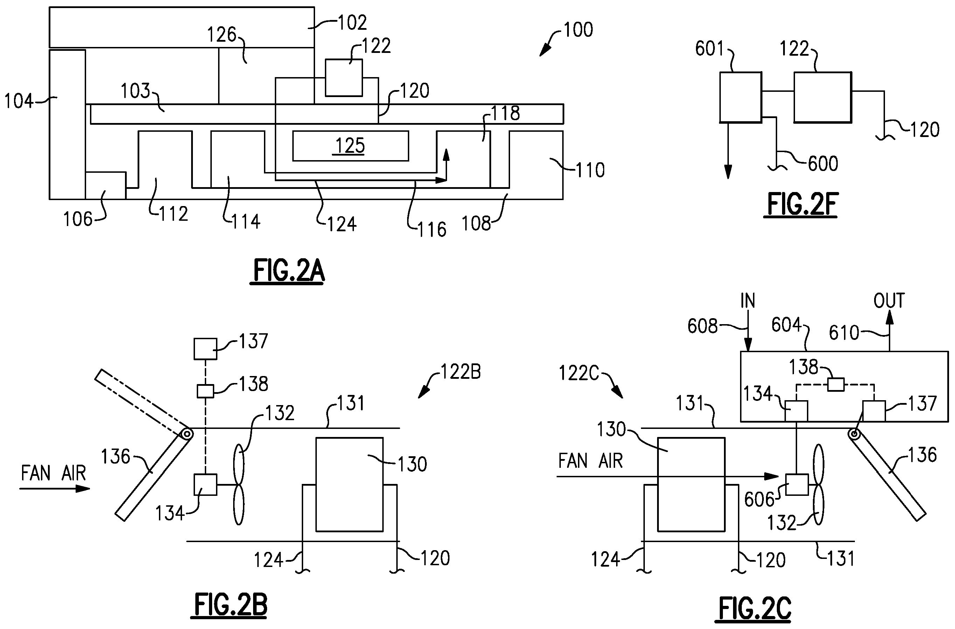

A cooling air system according to this disclosure may be understood from schematic Figure 2A. An engine 100 includes an outer fan casing 102 and an inner core housing 103. A main fan rotor 104 delivers air into a bypass duct and into the inner core housing 103, consistent with the engine of Figure 1. A gear reduction 106 connects the fan rotor 104 to be driven by a shaft 108 through a fan drive turbine 110. A low pressure compressor 112 rotates with the shaft 108. A high pressure compressor 114 rotates with a shaft 116 driven by a high pressure turbine 118. A high pressure tap 120 taps compressed air about a location at the downstream end of the high pressure compressor 114. The air passes through a cooling heat exchanger and an associated system 122, which will be described in its entirety below. The high pressure component of the air delivered by the cooling system 122 passes through and along stationary and rotating high spool structures in a somewhat radial direction. In this transit some air might be leaked through seals and some might be taken for cooling rotor disks at the rear of the high pressure compressor before turning into a somewhat axial and rearward direction by turning into a cooling air path 124, which may be partially radially inward of a combustor 125, and extends to the turbine section 118 for cooling at least the first turbine disk, but alternatively at least the first turbine disk and first turbine blade.

As known, the air is typically provided to a first stage of the high pressure turbine 118 and additionally the air leaks out of seals and can be used to at least partially cool the second turbine disk and its blade.

As shown in Figure 2F, along the path, the cool high pressure air downstream of heat exchanger 122 can be supplemented by uncooled high pressure air from tap 600. This can be done in a mixing chamber 601 and applies to the circumstance where the cooling system is set up to provide extra cool high pressure air in a small and insufficient quantity to positively purge out the disk cavities or maintain first turbine blade showerhead cooling backflow margin. The mixing chamber 601 can be located in one of the outside the engine casing or to a diameter that is outside of the diameter of the outer diameter of the last stage compressor, or inside the diameter of the flowpath of the last stage of the high pressure compressor. A location may be selected based upon packaging considerations in order to allow the compressor, combustor fuel nozzles and the combustor itself to have a proper orientation to flow one to the other and also to provide access to both the high pressure compressor and the high pressure turbine. Mixing chamber 601 where cold, high pressure air is mixed with hot air from around the high pressure compressor discharge, allows a designer to tailor the overall volumetric flow to the compressor 114 and the turbine 118 as desired and the heat exchanger 122 and ducts can be reduced in size from the situation when the mixing chamber is not used.

A nacelle upper bifurcation 126 is shown transmitting the fan air bypass duct in the area after the fan case 102 between the outer fan bypass duct and the inner core housing 103. It should be understood that there is a bifurcation at both vertically upper and lower locations but that they are different in that the upper bifurcation 126 in most underwing-mounted engines must be very wide and very long. The width of the upper bifurcation 126 is partially due to a large precooler for the aircraft's environmental control module system which is often placed there and partially due to the massive structure that holds the engine to the wing and is sized for weight, but also for catastrophic damage to the engine such as the unbalance due to a fan rotor failure. Further, the width must be tapered gradually so the upper bifurcation 126 typically extends well past the engine's fan nozzle

The lower bifurcation on the other hand is slender and short. It typically carries only a few tubes and latches and its main function is merely to streamline these and to tie the outer barrel of the nacelle to the inner barrel. In the execution of the lower bifurcation, the designer invariably wishes to make the bifurcation as slender as possible and therefore the taper allows the bifurcation to be ended before the end of the fan nozzle's end.

Figure 2B shows a basic detail of the intercooling system 122B (which is outside the wording of the claims) primarily from the bypass air side of the system. Heat exchanger 130 is positioned within an offtake duct 131 which connects to the bypass duct. While a general representation of a fan air offtake duct is shown in this figure, each specific duct in each location is different in each of the locations to be disclosed below. A propulsor 132, which may be a fan, is driven by a motor 134. A valve 136 is selectively moveable by a valve motor 137. The valve 136 may be a butterfly valve or a poppet valve or, as is shown in the figure the valve 136 may be a wedge shaped ramp so as to capture fan air total pressure when it extends into the bypass duct. Alternatively, the valve 136 can be a ramp that closes off flow by moving to a flush position. The inlets to each of the disclosed embodiments may be tailored to best suit the location. Flush mount inlets, total scoop inlets, and other options may be utilized as appropriate.

Further the valve 136 at the upper bifurcation 126 can be a door or doors that open the leading edge to catch fan air total pressure coming directly off of the fan exit guide vanes. This configuration is possible for the upper bifurcation 126 which is wide for the reasons cited earlier, but it might be more difficult to achieve at the lower bifurcation since the designer of heat exchanger arrangement at that location is likely to wish to orient the heat exchanger 130 so that the lower bifurcation is not made wider. One way to accomplish that is to turn the heat exchanger 130 sideways and use turning vanes and the fan to force the fan air through it. These turning vanes or louvers can be made to rotate about their axis and provide the valve necessary for best engine fuel consumption performance. Details of this will be disclosed below.

Control module 138 controls motors 134 and 137. Propulsor 132 and valve 136 are upstream of the heat exchanger 130 in this embodiment.

The term 'module' as used herein, and as understood by a person of ordinary skill in the art of gas turbine software programming, refers to an actual structure of software and/or hardware components that can execute the particular function identified as corresponding with said 'module'. Said correspondence is identified either by introductory text preceding the term 'module', or by other contextual text. Said structure of the particular modules detailed herein are either described with at least one specific algorithm, setting forth at least one embodiment for carrying out the corresponding function; or there exists one or more well-understood structures associated with the particular module by those skilled in the art.

At high power operation, the valve 136 is operable to allow air to reach propulsor 132 and drive low pressure fan air cooling air across the heat exchanger 130. Compressed air passes from line 120 into the heat exchanger 130 and is cooled by the cooling airflow from the propulsor 132. That air then returns to path 124. No change to the high pressure cooling air flow is made in these systems.

With the move to the gear reduction engines with extremely high bypass ratios, and to higher bypass ratio engine even without gear reduction, the fan pressure on the air downstream of the fan 104 has been reduced. In addition, the temperatures and pressures provided downstream of the high pressure compressor 114 have greatly increased. As such, the bypass air is at a pressure which does not provide sufficient airflow across the heat exchanger 130 to adequately cool the compressed air from line 120. The cooling load on this air is dramatically increased, as can be appreciated, such that disk material properties can age and deteriorate due to the temperature and time exposure to the elevated temperatures. To counter the reduced pressures in the bypass duct the propulsor 132 provides an adequate airflow across the heat exchanger 130. For a given cooling requirement, set by economically required disk life and for required 1^{st} turbine blade life, the propulsor 132 increases the flow per unit area being pulled through the duct and thereby reduces the size of the heat exchanger 130 by raising the flow per unit area through the heat exchanger 130.

On the other hand, the move to higher and higher overall compressor pressures has provided overall gas turbine engine 100 efficiency improvements by enabling a reduced core air flow and inherently high bypass ratio. It would be desirable to operate the high pressure cooling air system 122B as efficiently as possible recognizing that, especially in a commercial engine the engine power, internal pressures and internal temperatures are reduced continuously as the aircraft weight is reduced from burning fuel that was on board at the initial takeoff. For that reason, the use of the valve 136, which can be selectively closed to prevent airflow, increases the efficiency of the engine by using the air selectively to provide turbine durability but returns the fan air flow to the fan duct when power is reduced thereby reducing compressor and turbine temperatures naturally and eliminating the need for cooling the high pressure cooling air. The passage of the low pressure cooling airflow across the heat exchanger 130 does reduce efficiency of the engine by reducing the thrust produced by the fan nozzle, and, thus, the passage of fan air through the system would be desirably limited to when it is necessary.

Figure 2C shows an embodiment 122C wherein the propulsor 132 and valve 136 are positioned downstream of the heat exchanger 130 in the cooling airflow path. In this embodiment, the electric motors 134 and 137 or other actuation devices are positioned to be out of the cooling airflow path, downstream of the heat exchanger 130. The propulsor may be driven through a gear box 606. In addition, a cooling jacket 604 insulates the motors 134, 137 and may insulate the control module 138. Jacket cooling air at 608 may cool the components and exit at 610. It should be understood that the cooling air downstream of the heat exchanger 130 will be quite hot and positioning motor 134, 137, and control module 138 in that flow path may be detrimental to the operation of those components. (Figure 2B, which is outside the wording of the claims, shows the propulsor 132 and valve 136 upstream of the heat exchanger 130 in the cooling airflow path) Notably, should the cold air valve fail in the closed position, the temperature in the duct downstream of the heat exchanger 130 will be extremely hot, potentially damaging anything inside the duct or even outside the duct due to heat radiation.

Figure 2D shows another option wherein the control module 138 and motors 134 and 137 are shrouded by a heat isolating shroud 139, such as a stainless steel shroud that is purged with cold air at 612 on a permanent basis should a valve failure occur. A control module/valve 613 controls this flow. The configuration could also be insulated but the insulation may only provide a time delay in reaching the temperature of the surrounding over tempted air, while the cold air buffer will provide a permanent protection from the heat coming off of the heat exchanger 130. Air is shown at 615 leaving the shroud.

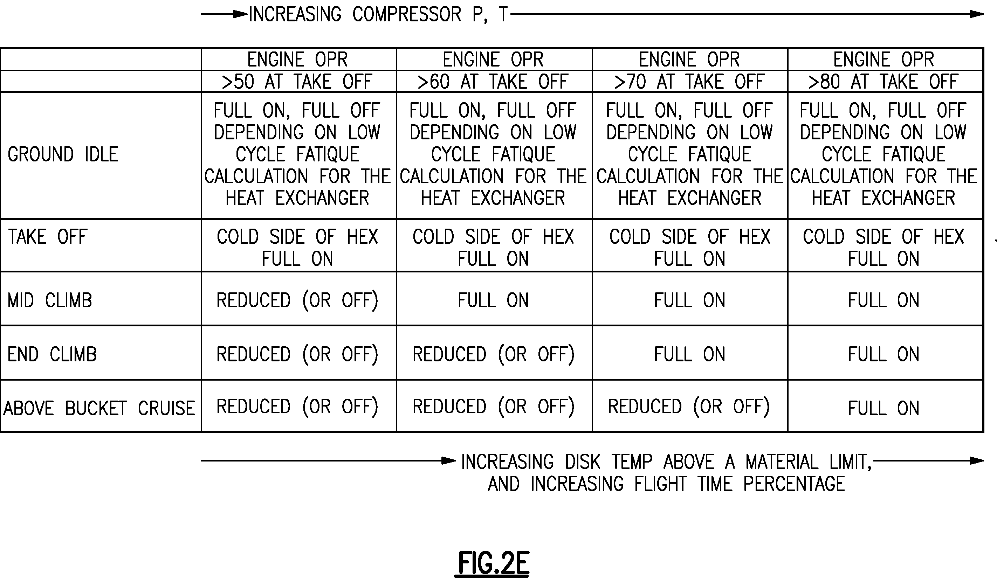

Figure 2E shows a control module diagram for a cooled system like the intercooled high pressure cooling air system 122. This control module diagram is representative of an algorithm that may be implemented within the control module 138. The "cold side" is the low pressure fan air cooling airflow. As is noted in the Figure, the overall pressure ratio and the utilization of the engine and aircraft drive the low cycle fatigue life of both the compressor disk and the turbine disks. The first turbine blade life is also dependent on the temperature of the air outside the hollow blade and the cooling air within the blade. At the same time disk material alloys can morph to a less capable material with exposure in terms of temperature and time at temperature. Therefore the table shows increased utilization of the system as OPR is increased since 86° F sea-level takeoff max power OPR, the total pressure rise from the front face of the fan blade through the exit of the compressor section, is a good figure of merit to what is happening to the disk rim temperatures and to both the turbine gaspath temperature and the cooling air inside the blade thereby setting the blade metal temperature somewhere in between.

As can be seen, Figure 2E shows four different control regimes. It should be understood that each of the four regimes may become less practical as one moves away from the lower end of the range. As an example, the 50 OPR regime may be utilized up to 70 OPR; the 60 OPR regime may be utilized up to 80 OPR; the 70 OPR regime may be utilized up to 90 OPR; and the 80 OPR regime may be utilized up to 100 OPR. Of course, within each of these regimes, real world considerations may cause a designer to utilize a particular regime above the indicated upper range, or perhaps even below the indicated lower range. Factors such as economic issues relating to part life could impact upon this decision.

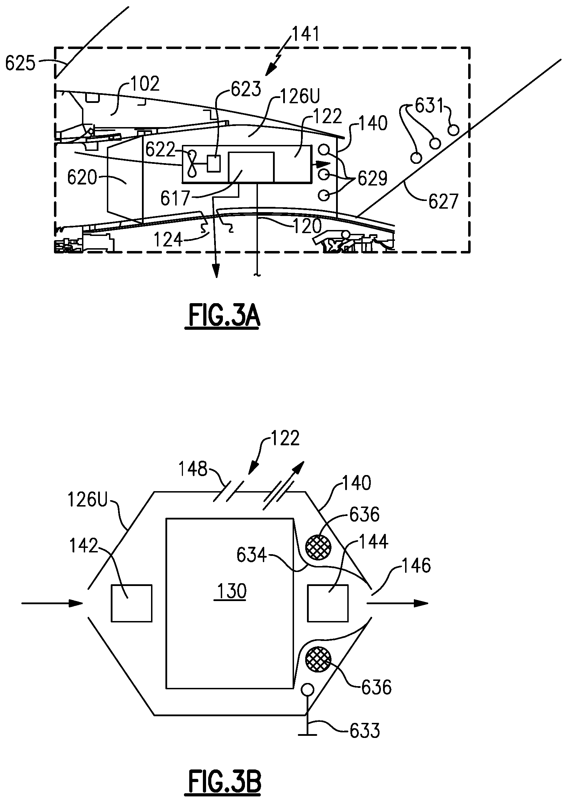

Figure 3A shows a first location 141 for the cooled cooling high pressure cooling air system 122 (which is outside the wording of the claims).

Embodiment 141 locates the cooled cooling system 122 in the upper bifurcation 126U. As shown, a downstream end 140 of the upper bifurcation 126U can be utilized as a cooling air exit. A valve 620 formed by a single door forms the nose of the bifurcation and downstream of the valve 620 is a bank of high power propulsor, or propulsors 622 that are electrically operated and with electric motors 623 immediately in front of the heat exchanger 617. The pylon leading edge 625, and rear edge 627 are shown. The exit of the system can be holes 629 upstream of the fan nozzle thereby exhaust to a pressure that is about equal to fan duct static pressure at the point at which the designer places the exit. An alternative, improved variation of the cold side of the system is to place the exit holes 631 downstream of the fan nozzle which will reduce the heat exchanger size by providing the highest pressure difference across the system, that is, total pressure off of the fan exit guide vanes and then dumping the flow to a pressure that is likely to be slightly below ambient due to the velocities downstream of the pylon aft of the fan nozzle.

Figure 3B shows the heat exchanger 130. The fan 622 and valve 620 may be at an upstream location 142 or a downstream location 144. As known, upper bifurcation 126U extends for a relatively great circumferential width and a long axial span. Thus, the heat exchanger 130 can sit with its greater dimension perpendicular to an axis of rotation of the main fan rotor. Owing to the long axial span the designer may provide for an exhaust duct 634 to exits 148 or 146 to protect the engine support structure 636 there in a under-wing mounted engine from seeing either the normal high temperature exhaust of the heat exchanger 130 or the abnormally high temperature exhaust in the event that the valves fail in the closed position. The designer may also choose to provide for temperature measurements (see sensors 633) outside the heat exchanger and ducting arrangement to detect a failure that might compromise the integrity of the engine support structure 636.

The exit 146 is shown as well as an alternative exit 148 in one of the sides of the upper bifurcation 126U.

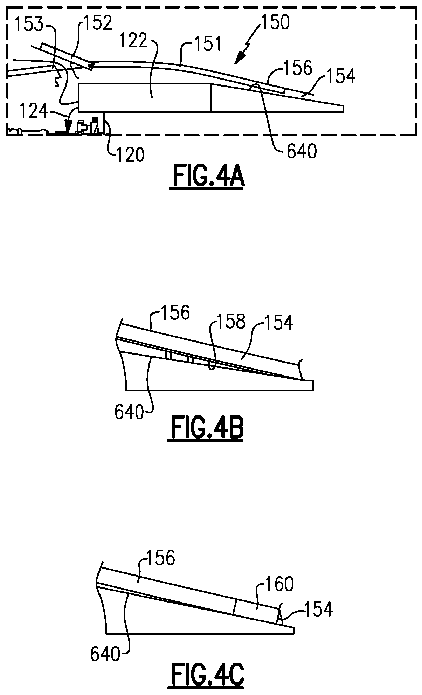

Figure 4A shows an alternative location 150 for the high pressure cooled cooling air system 122. Location 150 is within the core housing 151. The valve 152 may sit on the nacelle door that covers the engine core 151. The kiss seals 153 allow the intake duct to the heat exchanger and the upstream valve and an upstream fan can all be mounted to the nacelle door and to make a connection to the upstream side of the heat exchanger by compressing the kiss seal 153 when the nacelle door is closed. High pressure ducting 640 going into the heat exchanger is hard mounted, meaning it is bolted, welded or otherwise connected together to provide the designer assurance that these ducts will be reliably sealed to prevent the entire nacelle from seeing hot air. The kiss seals 153, made of silicone rubber tubes or flaps or even stainless steel sheet metal bellows, are desirably installed upstream of the heat exchanger. Downstream of the heat exchanger the exhaust must be channeled via duct 640 to exhaust 154. Duct 640 is also hard connected to the heat exchanger. The low pressure exhaust will be hot, perhaps over 1200°F (649°C) under normal conditions and perhaps over 1400°F (760°C) if the upstream low pressure flow valve fails. This downstream duct 640 can be of stainless steel or a ceramic matrix composite but in either case it should handle the valve failure scenario and also protect the low temperature capable nacelle materials (generally composite or aluminum) from damage. So the Figure 4A shows the duct 640 extending all of the way past the core nacelle 154 to reach a point that is equal to ambient pressure or perhaps a little higher or lower depending on engine flight speed and exiting over the core nozzle which is typically made of a high temperature capable material.

In this embodiment, the cooling air downstream of the heat exchanger in the intercooled cooling system 122 will be hot, as mentioned above. Thus, at locations 156 in the core housing 151, which are downstream of the heat exchanger, protection may be desirable prior to the air exit 154. As known, these structural locations are typically provided with materials that do not have great resistance to heat. Thus, Figure 4B shows an option wherein those downstream locations 156 are provided with a shield patch 158, such as a liner formed of stainless steel. If such a shield patch 158 is employed, it is still desirable to provide an exhaust duct 640 from the heat exchanger for a few reasons. First the air from the heat exchanger must be positively directed overboard; failure to do this may over temperature the air within the core nacelle generally leading to overtemperaturing of electrical components and other components. Secondly the local patch is necessary for radiation shielding from the duct because the temperature capability of the core nacelle in the rear is marginal in view of the existing radiation from the engine casings.

Figure 4C shows an embodiment wherein a nozzle 160 at a downstream end 154 may be formed of a heat resistant material such as stainless steel or ceramic. This configuration desirably has a dedicated (albeit squashed) exhaust ducting 640 that is hardmounted to the heat exchanger either by a bolted flange or welded arrangement of the duct 640 to the heat exchanger

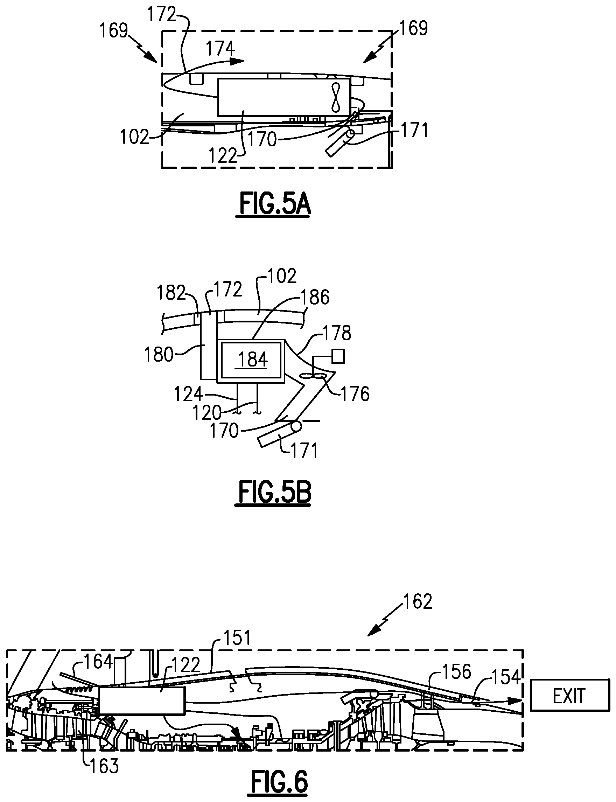

Figure 5A shows an embodiment 169, which is outside the wording of the claims, wherein a high pressure cooled cooling air system 122 is positioned in the outer fan casing 102. An air inlet 170 is selectively closed by a valve 171 which alternatively may also be a total pressure scoop when it is deployed into the bypass stream. The exit 172 may be radially outward of the fan case 102 and deliver the air into the ambient air stream at 174.

Figure 5B shows details of the embodiment 169. As shown, a duct 178 may deliver the cooling air from the inlet 170 across a heat exchanger 184. The propulsor 176 may be positioned in this duct 178. A duct 180 captures the cooling air downstream of the heat exchanger 184. That air is then delivered to the outlet 172.

As known, the outer fan housing 102 is typically provided by a lightweight material. With the move to a gear reduction driving the fan rotor, the fan rotor has increased in diameter and, thus, the size of the outer fan case 102 has increased. Industry trends in general have fan diameters increasing and compressor pressures and temperatures increasing. To preserve the efficiency benefit of utilizing higher bypass ratios generally, the large outer fan case 102 is desirably made of lightweight materials. However, those lightweight materials have decreased resistance to heat, thus the heat exchanger 184 is desirably insulated on all sides to prevent the fan case 102 and the fan case outer door from seeing radiated heat under normal conditions and in conditions where the valve 171 fails to open, pushing heat exchanger body and heat exchanger exit duct to 1400F. This extremely high temperature exhaust will effect even the outer skin of the nacelle for a distance until the hot air mixes out, therefore necessitating a high temperature patch at the exhaust or other mitigating features Thus, the use of the duct, and at least portion 180, downstream of the heat exchanger 184, becomes more valuable.

As also shown in Figure 5B, shielding 182 may be provided about the exit 172. Also, the heat exchanger 184 may be provided by heat insulated shielding 186. Again, the shielding 186 may be formed of stainless steel or other heat insulating materials or even double wall construction.

Figure 6 shows an embodiment 162 wherein the high pressure cooling air cooled cooling system 122 is provided within the core engine housing 151. However, this time it is provided at a more upstream location and radially outward of the compressor section 163. The valve 164 may be selectively opened to allow the cooling air to flow into the core housing 151 in this embodiment from an inner fan casing structure forming the inner part of the bypass stream in the fan module. The Figure 6 embodiment may be provided with the protective structure similar to that shown in Figures 4B and 4C at the rear of the engine core compartment with the same concerns for normal temperature mitigation and over temperature mitigation. The advantage of the overall system in Figure 6 is that the entire affair is hard mounted to the engine, both on the high pressure side and the low pressure ducting sides without silicone rubber seals or other splits. This allows valves and fans and sensors all to be firmly fixed. A disadvantage of the Figure 6 systems is that it is a very large radiator of heat introduced to the front of the engine where electronic, electrical and other low temperature components are routinely placed. Accordingly, the system or portion thereof may need insulation or double wall construction to eliminate thermal radiation.

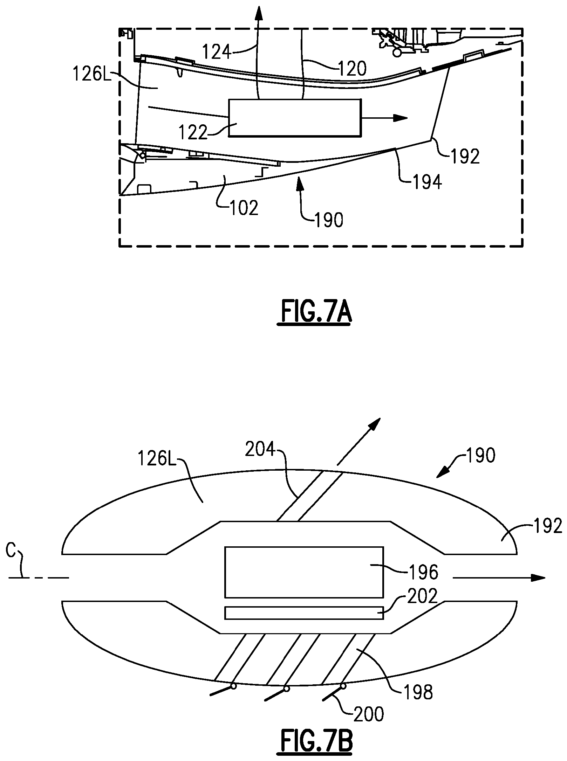

Figure 7A shows an embodiment 190, which is outside the wording of the claims, wherein the high pressure cooled cooling air system 122 is positioned within the lower bifurcation 126L. In this embodiment, a downstream end 192 of the lower bifurcation 126L may be moved to be downstream of a downstream end 194 of the outer fan case 102. This will allow the air to exit into ambient air and not have to overcome any back pressure that would occur if the exit were upstream of the fan nozzle. This configuration has the additional benefit of making more room for the heat exchanger in the typically slender bifurcation.

Figure 7B shows details of the embodiment 190. As known, the lower bifurcation 126L extends for a small circumferential width in most engines. Thus, the heat exchanger 196 is positioned such that its largest dimension extends in a direction at least having a component, which is parallel to the axis of rotation of the main rotor. Inlets 198 may be formed in one of the sides of the lower bifurcation 126L and the valve may be provided by a movable louver 200 or multiple louvers which can be designed to catch a high portion of the available fan duct total pressure while forming an effective valve for the turning off the low pressure flow. The fan 202 may also be positioned along the larger dimension of the heat exchanger 196 and may rotate within an axis of rotation which at least has a component in a direction which is perpendicular to the axis of rotation of the fan rotor. An alternative exit 204 is shown at an opposed side of the lower bifurcation 126L which has the advantage lower weight.

Other consideration of the lower bifurcation arrangement are again the valve failure case. The structure here is typically aluminum with aluminum acoustic treatment panels. This type of construction is likely not desirable but may be replaced by a much higher temperature material such as steel or ceramic matrix composites.

In terms of hardware architecture, such a control module 138 can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as control modules 138, buffers (caches), drivers, repeaters, and receivers to enable communications. Further, the local interface may include address, control module, and/or data connections to enable appropriate communications among the aforementioned components.

The control module 138 may be a hardware device for executing software, particularly software stored in memory. The processor can be a custom made or commercially available processor, a central processing unit (CPU), an auxiliary processor among several processors associated with the control module 138, a semiconductor based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, etc.). Moreover, the memory may incorporate electronic, magnetic, optical, and/or other types of storage media. The memory can also have a distributed architecture, where various components are situated remotely from one another, but can be accessed by the control module 138.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The input/output devices that may be coupled to system I/O Interface(s) may include input devices, for example, but not limited to, a scanner, microphone, camera, proximity device, etc. Further, the input/output devices may also include output devices, for example but not limited to a display, etc. Finally, the input/output devices may further include devices that communicate both as inputs and outputs, for instance but not limited to, a modulator/demodulator (for accessing another device, system, or network), a radio frequency (RF) or other transceiver, a bridge, a router, etc.

Various modifications of the several disclosures would come within the scope of this invention. As an example, the motors for the valve and the propulsor in these embodiments may be electric, hydraulic, or air motors. One specific hydraulic embodiment may utilize fuel as a driving source.

Although an embodiment of this invention has been disclosed, a worker of ordinary skill in this art would recognize that certain modifications would come within the scope of the invention, which is defined by the following claims.

## Claims

1. A gas turbine engine (100) comprising:
a fan rotor (104);
a compressor aft (112, 114) of said fan rotor (104);
a combustor aft (125) of said compressor (112, 114);
a turbine section (118) aft of said combustor (125), said turbine section (118) configured to drive said compressor (112, 114) and said fan rotor (104);
a cooling air system (122) comprising:
an input connected to a compressed air tap (120, 600);
an output connected to at least said turbine section (118); and
a heat exchanger (130; 184; 196) having a first path and a second path, wherein the first path is disposed between said input and said output; and
a propulsor (132; 622; 176) disposed along a lower pressure cooling air path, wherein said heat exchanger second path is in fluid communication with at least a portion of said lower pressure cooling air path; and
a valve (136; 620; 171; 164; 152) disposed along the lower pressure cooling air path and configured to control flow within said heat exchanger second path, **characterised in that**
at least one of said valve (136; 620) and said propulsor (132; 622) is positioned downstream of said heat exchanger (130; 184; 196) in a cooling airflow path;
said propulsor (132; 622; 176) has a motor (134, 137; 623) which is shrouded to provide at least the motor (134, 137; 623) with a cooling jacket (604);
said heat exchanger (130...196), said valve (136...152), and said propulsor (132...176) are located within a core engine housing (151);
the cooling air exits at a nozzle (160) at a downstream end of said core engine housing (151);
the nozzle (160) is formed of stainless steel or a ceramic material; and
insulation material is provided at an inner peripheral portion of said core engine housing (151) downstream of a location of said heat exchanger (130...196).

2. The gas turbine engine as set forth in claim 1, wherein a motor (134, 137) for said at least one of said valve (136; 176; 164; 152) and said propulsor (132; 176) is positioned out of said cooling airflow path downstream of said heat exchanger (130; 184; 196).

3. The gas turbine engine as set forth in any preceding claim, wherein a duct (640) is fixed to the heat exchanger (130... 196) to capture the cooling air downstream of the heat exchanger (130...196) and deliver it to an exit.

4. The gas turbine engine as set forth in any preceding claim, wherein a gear reduction (106) is positioned between a fan drive turbine rotor in said turbine section (118) and said fan rotor (104).

5. The gas turbine engine of any preceding claim, wherein said valve (136... 152) and said propulsor (132... 176) are controlled to provide cooling airflow across said heat exchanger (130... 196) at least during take-off condition of said gas turbine engine (100).

## Patentansprüche

1. Gasturbinentriebwerk (100), umfassend:
einen Gebläserotor (104);
einen Kompressor hinter (112, 114) dem Gebläserotor (104);
eine Brennkammer hinter (125) dem Kompressor (112, 114);
einen Turbinenabschnitt (118) hinter der Brennkammer (125), wobei der Turbinenabschnitt (118) dazu konfiguriert ist, den Kompressor (112, 114) und den Gebläserotor (104) anzutreiben;
ein Kühlluftsystem (122), umfassend:
einen Eingang, der mit einem Drucklufthahn (120, 600) verbunden ist;
einen Ausgang, der mit mindestens dem Turbinenabschnitt (118) verbunden ist; und
einen Wärmetauscher (130; 184; 196) mit einem ersten Pfad und einem zweiten Pfad, wobei der erste Pfad zwischen dem Eingang und dem Ausgang angeordnet ist; und
einen Antrieb (132; 622; 176), der entlang eines Kühlluftpfads mit niedrigerem Druck angeordnet ist, wobei der zweite Pfad des Wärmetauschers in Fluidverbindung mit zumindest einem Abschnitt des Kühlluftpfads mit niedrigerem Druck steht; und
ein Ventil (136; 620; 171; 164; 152), das entlang des Kühlluftpfads mit niedrigerem Druck angeordnet ist und dazu konfiguriert ist, den Durchfluss innerhalb des zweiten Pfads des Wärmetauschers zu steuern, **dadurch gekennzeichnet, dass** mindestens eines von dem Ventil (136; 620) und dem Antrieb (132; 622) stromabwärts des Wärmetauschers (130; 184; 196) in einem Kühlluftströmungspfad positioniert ist;
der Antrieb (132; 622; 176) einen Motor (134, 137; 623) aufweist, der ummantelt ist, um zumindest den Motor (134, 137; 623) mit einem Kühlmantel (604) zu versehen;
der Wärmetauscher (130...196), das Ventil (136...152) und der Antrieb (132...176) sich in einem Kerntriebwerksgehäuse (151) befinden;
die Kühlluft an einer Düse (160) an einem stromabwärtigen Ende des Kerntriebwerksgehäuses (151) austritt;
die Düse (160) aus rostfreiem Stahl oder einem Keramikmaterial gebildet ist; und
Isoliermaterial an einem inneren Umfangsabschnitt des Kerntriebwerksgehäuses (151) stromabwärts einer Stelle des Wärmetauschers (130...196) bereitgestellt ist.

2. Gasturbinentriebwerk nach Anspruch 1, wobei ein Motor (134, 137) für das Ventil (136; 176; 164; 152) und/oder den Antrieb (132; 176) außerhalb des Kühlluftstrompfads stromabwärts des Wärmetauschers (130; 184; 196) positioniert ist.

3. Gasturbinentriebwerk nach einem der vorhergehenden Ansprüche, wobei an dem Wärmetauscher (130...196) ein Kanal (640) befestigt ist, um die Kühlluft stromabwärts des Wärmetauschers (130...196) aufzufangen und zu einem Ausgang zu leiten.

4. Gasturbinentriebwerk nach einem der vorhergehenden Ansprüche, wobei ein Untersetzungsgetriebe (106) zwischen einem Gebläseantriebsturbinenrotor in dem Turbinenabschnitt (118) und dem Gebläserotor (104) positioniert ist.

5. Gasturbinentriebwerk nach einem der vorhergehenden Ansprüche, wobei das Ventil (136...152) und der Antrieb (132...176) so gesteuert werden, dass sie zumindest während des Startzustands des Gasturbinentriebwerks (100) einen Kühlluftstrom über den Wärmetauscher (130...196) bereitstellen.

## Revendications

1. Moteur à turbine à gaz (100) comprenant :
un rotor de ventilateur (104) ;
un compresseur (112, 114) à l'arrière dudit rotor de ventilateur (104) ;
une chambre de combustion (125) à l'arrière dudit compresseur (112, 114) ;
une section de turbine (118) à l'arrière de ladite chambre de combustion (125), ladite section de turbine (118) étant configurée pour entraîner ledit compresseur (112, 114) et ledit rotor de ventilateur (104) ;
un système d'air de refroidissement (122) comprenant :
une entrée reliée à un robinet d'air comprimé (120, 600) ;
une sortie reliée à au moins ladite section de turbine (118) ; et
un échangeur de chaleur (130 ; 184 ; 196) présentant un premier trajet et un second trajet, dans lequel le premier trajet est disposé entre ladite entrée et ladite sortie ; et
un propulseur (132 ; 622 ; 176) disposé le long d'un trajet d'air de refroidissement à basse pression, dans lequel ledit second trajet d'échangeur de chaleur est en communication fluidique avec au moins une partie dudit trajet d'air de refroidissement à basse pression ; et
une soupape (136 ; 620 ; 171 ; 164 ; 152) disposée le long du trajet d'air de refroidissement à basse pression et configurée pour contrôler le débit à l'intérieur dudit second trajet d'échangeur de chaleur, **caractérisé en ce que**
au moins l'une ou l'un de ladite soupape (136 ; 620) et dudit propulseur (132 ; 622) est positionné(e) en aval dudit échangeur de chaleur (130 ; 184 ; 196) dans un trajet d'écoulement d'air de refroidissement ;
ledit propulseur (132 ; 622 ; 176) présente un moteur (134, 137 ; 623) qui est caréné pour fournir au moins au moteur (134, 137 ; 623) une chemise de refroidissement (604) ;
ledit échangeur de chaleur (130...196), ladite soupape (136...152) et ledit propulseur (132...176) sont situés à l'intérieur d'un carter de moteur central (151) ;
l'air de refroidissement sort par une buse (160) à une extrémité aval dudit carter de moteur central (151) ;
la buse (160) est composée d'acier inoxydable ou d'un matériau céramique ; et
un matériau isolant est prévu sur une partie périphérique intérieure dudit carter de moteur central (151) en aval d'un emplacement dudit échangeur de chaleur (130...196).

2. Moteur à turbine à gaz selon la revendication 1, dans lequel un moteur (134, 137) pour ladite ou ledit au moins l'une ou l'un de ladite soupape (136 ; 176 ; 164 ; 152) et dudit propulseur (132 ; 176) est positionné hors dudit trajet d'écoulement d'air de refroidissement en aval dudit échangeur de chaleur (130 ; 184 ; 196).

3. Moteur à turbine à gaz selon une quelconque revendication précédente, dans lequel un conduit (640) est fixé à l'échangeur de chaleur (130...196) pour capturer l'air de refroidissement en aval de l'échangeur de chaleur (130...196) et le délivrer vers une sortie.

4. Moteur à turbine à gaz selon une quelconque revendication précédente, dans lequel une réduction d'engrenage (106) est positionnée entre un rotor de turbine d'entraînement de ventilateur dans ladite section de turbine (118) et ledit rotor de ventilateur (104).

5. Moteur à turbine à gaz selon une quelconque revendication précédente, dans lequel ladite soupape (136...152) et ledit propulseur (132...176) sont contrôlés pour fournir un écoulement d'air de refroidissement à travers ledit échangeur de chaleur (130...196) au moins pendant la condition de décollage dudit moteur à turbine à gaz (100).
